# EUROPÄISCHE PATENTSCHRIFT

(11) **EP 2 586 559 B1**
(45) Veröffentlichungstag und Bekanntmachung des Hinweises auf die Patenterteilung: **04.03.2015**
(21) Anmeldenummer: 12189438.0
(22) Anmeldetag: 22.10.2012
(51) Int. Cl.: B23K 7/10, B23K 26/08, B23K 37/04, B08B 15/00, B26D 7/01, B26D 7/18

(54) **Schneidtisch mit Absaugelementen, einem Gurtförderer, und einer Wanne**
Cutting table with suctions devices, a belt conveyor, and a bath
Table de découpe avec des éléments d'aspiration, un convoyeur à bande et un bassin

(30) Priorität: 26.10.2011 DE 202011107169 U; 10.11.2011 DE 202011107687 U
(43) Veröffentlichungstag der Anmeldung: 01.05.2013
(73) Patentinhaber: Beuting, Alfred, 48691 Vreden (DE)
(72) Erfinder: Beuting, Alfred, 48691 Vreden (DE)
(74) Vertreter: Linnemann, Winfried

(56) Entgegenhaltungen:
- DE-A1- 19 602 550
- DE-U1- 8 622 740
- DE-U1-202010 008 500
- FR-A1- 2 679 810
- US-A- 5 435 525

## Beschreibung

Die Erfindung betrifft einen Schneidtisch für eine Anlage zum Schneiden eines Werkstücks gemäß dem Oberbegriff des Anspruchs 1.

Ein entsprechender Schneidtisch ist beispielsweise aus der Gebrauchsmusterschrift DE 20 2010 008 500 U1 bekannt, deren Inhalt in die vorliegende Anmeldung einbezogen sein soll.

Anlagen zum Schneiden von Werkstücken werden häufig zur Herstellung von Halbzeugen eingesetzt, wozu in der Regel metallischen Werkstücke auf gewünschte Art und Weise zugeschnitten werden. Die meist eben und flächig ausgebildeten Werkstücke werden hierzu auf die Werkstückauflage aufgelegt, die üblicherweise einen mit den Werkstücken in Kontakt kommenden Schneidrost mit geeigneter Formgebung aufweist. Nach Auflage eines Werkstücks auf den Schneidrost kann das Schneiden des Werkstücks mittels einer Schneideinrichtung erfolgen, wobei das Werkstück und die Schneideinrichtung hierbei Relativbewegungen zueinander ausführen.

Insbesondere beim Schneiden von Werkstücken mittels Brennschneiden, Laserschneiden oder Plasmaschneiden werden schädliche Stäube und/oder Gase erzeugt, die es abzusaugen gilt. Hierzu dient die unter der Werkstückauflage angeordnete Absaugeinheit. Um die Energieeffizienz der oben beschriebenen Schneidanlagen zu verbessern, weist die Absaugeinheit mehrere quer zur Längserstreckung des Schneidtisches ausgerichtete, benachbart zueinander angeordnete Absaugsegmente auf, die zum Absaugen der beim Schneiden auftretenden Stäube und/ oder Gase wahlweise mit einem Absaugkanal verbindbar sind. Hierdurch kann eine sehr effektive Absaugung von Stäuben und/oder Gasen in dem Bereich des Schneidtisches erfolgen, in dem momentan das Werkstück geschnitten wird.

Beim Schneiden von Werkstücken mittels der genannten Anlagen kommt es des Weiteren zur Erzeugung von Schneidrückständen, wie beispielsweise Schlacke. Diese Schneidrückstände werden für gewöhnlich unterhalb der Werkstückauflage aufgefangen und können anschließend entfernt werden.

Aus dem Stand der Technik sind verschiedene Schneidtische bekannt:
Das Dokument US 5 435 525 A zeigt einen Schneidtisch mit leistenförmiger Werkstückauflage, mit einer Unterdruckkammer mit Luftabsaugung unter der Auflage und mit einer Wasserwanne unter der Unterdruckkammer. Zusätzlich sind zwischen den Leisten der Werkstückauflage dachförmige Profile angeordnet, die mit den Leisten zusammen den freien Querschnitt zwischen Umgebung und Unterdruckkammer verkleinern. Zum Auffangen von Schlacke sind Schlackensammelkästen vorgesehen, die heb- und senkbar sind und die aus dem Tisch zum Entleeren entnehmbar sind.

Das Dokument FR 2 679 810 A1 zeigt einen Schneidtisch, der in Absaugsegmente unterteilt ist, die über verstellbare Schieber bedarfsweise mit einer Absaugleitung verbunden werden. Die mit den Schiebern versehenen Absaugöffnungen liegen dabei unmittelbar über dem Wasserspiegel der Wasserwanne. Mittel zum Fördern von Schlacke sind hier in der Wasserwanne nicht vorgesehen.

Das Dokument DE 86 22 740 U1 zeigt einen Schneid- oder Schweißtisch mit einer Doppelwandung, die einen Luftabsaugkanal bildet. Unten im Tisch ist eine Wasserwanne vorgesehen. Der Innenraum des Tisches ist über gitterartige Absaugöffnungen mit dem Luftabsaugkanal verbunden. Eine Unterteilung in Absaugsegmente ist hier nicht vorgesehen und wegen der geringen Größe des Tisches auch nicht nötig. Das in die Wanne fallende Material wird hier einfach so lange gesammelt, bis sich eine schlammartige Masse gebildet hat, die dann entsorgt wird.

Das Dokument DE 196 02 550 A1 zeigt eine Vorrichtung zum Herstellen von Autogen- oder Plasmazuschnitten aus Stahlhalbzeug. Hier ist ein Schneidtisch innerhalb einer Wasserwanne höhenverstellbar angeordnet, wobei im Schneidbetrieb der Tisch und das Werkstück unter dem Wasserspiegel liegen. Über den Boden der Wanne verläuft ein Kratzförderer, mit dem ausgeschnittene Kleinteile und Schneidrückstände aus der Wanne heraustransportierbar sind.

Im Hinblick auf den bekannten Stand der Technik ist es Aufgabe der Erfindung, einen zur Durchführung verschiedenster Arten von Schneidverfahren einsetzbaren, neuartigen Schneidtisch mit einem einfachen Aufbau bereitzustellen, der gegenüber herkömmlichen Schneidtischen die Durchführung von Schneidprozessen mit höherer Produktivität ermöglicht.

Die Erfindung wird mit einem Schneidtisch gemäß Anspruch 1 definiert.

Erfindungsgemäß wird somit die untere Begrenzung der Absaugsegmente durch die Wasseroberfläche des in der Wanne befindlichen Wassers gebildet, wodurch Material zur Ausbildung der Absaugeinheit und somit des Schneidtisches gespart werden kann, was mit verringerten Herstellungskosten verbunden ist. Dieser einfache Aufbau des erfindungsgemäßen Schneidtisches ist zudem mit einer Gewichtsreduzierung verbunden, was sich positiv auf den Transport des Schneidetisches zu Produktionsstätten auswirkt.

Zudem können bei dem erfindungsgemäßen Schneidtisch die beim Schneiden eines Werkstücks entstehenden Teile und Schneidrückstände einfach durch das jeweilige Absaugsegment in das Wasser beziehungsweise in die Wanne fallen, ohne dass es hierzu erforderlich wäre, eine zusätzliche Öffnung in dem Absaugsegment vorzusehen, durch die Umgebungsluft auf nachteilige Art und Weise beim Absaugen in das Absaugsegment einströmen könnte, was mit einer Verschlechterung der Absaugung verbunden wäre. Zudem müsste bei dieser nachteiligen Ausbildung der Absaugeinheit deutlich mehr Energie zum Absaugen aufgewendet werden, um die mit dem erfindungsgemäßen Schneidtisch verbundene Absaugleistung zu erzielen. Hiermit wäre aber wiederum eine schlechtere Energieeffizienz einer mit einem solchen nicht erfindungsgemäßen Schneidtisch betriebenen Anlage verbunden.

Durch die erfindungsgemäße Anordnung der mit Wasser befüllbaren Wanne unterhalb der nach unten offenen Absaugsegmente werden zudem beim Schneidprozess entstehende Funken gelöscht. Dadurch kann ausgeschlossen werden, dass Funken mit abgesaugt werden, was im schlimmsten Fall zu einem Brand in einem Filter der Absauganlage führen könnte, an die die Absaugeinheit des Schneidtisches angeschlossen ist.

Durch die Anordnung der Wanne unter der Absaugeinheit und der Werkstückauflage ist es möglich, einen Schneidvorgang auch unter Verwendung von Wasserstrahlschneiden durchzuführen, da das hierbei verwendete Wasser mittels der Wanne aufgefangen werden kann. Der erfindungsgemäße Schneidtisch eignet sich trotz seines sehr einfachen Aufbaus damit zur Durchführung von Laserschneiden, autogenem Brennschneiden, Plasmaschneiden und Wasserstrahlschneiden. Im Rahmen der Erfindung können jedoch auch andere, entsprechende Rückstände erzeugende Bearbeitungen von Werkstücken, wie beispielsweise Schweißarbeiten, auf dem erfindungsgemäßen Schneidtisch durchgeführt werden, um die vorteilhafte Ausgestaltung des erfindungsgemäßen Schneidtisches zu nutzen.

Dass sich die unteren Öffnungen der Absaugsegmente etwa in Höhe des Wasserspiegels befinden, soll bedeuten, dass die unteren Öffnungen auch geringfügig in das Wasser eintauchen oder sich in einem geringem Abstand oberhalb des Wasserspiegels befinden können, ohne dass hierdurch die genannten vorteilhaften Wirkungen des erfindungsgemäßen Schneidtisches beeinträchtigt werden. Selbst wenn sich die unteren Öffnungen der Absaugsegmente in einem Abstand von bis zu 20 mm oberhalb des Wasserspiegels befinden, ist die mit der Erfindung verbundene, gesteigerte Schneidprozessproduktivität gegeben, da durch den gering dimensionierten Spalt zwischen den unteren Öffnungen und dem Wasserspiegel nur ein unwesentlicher Anteil an Umgebungsluft angesaugt wird.

Gemäß der Erfindung ist außerdem in der Wanne ein Abschnitt eines Gurtförderers derart angeordnet, dass sich der Abschnitt bei bestimmungsgemäß mit Wasser befüllter Wanne vollständig im Wasser befindet. Hierdurch können die in das Wasser beziehungsweise in die Wanne fallenden Schneidrückstände kontinuierlich und automatisiert aus der Wanne abtransportiert werden, was den Betrieb des Schneidtisches deutlich vereinfacht. Der Gurtförderer weist hierzu einen Fördergurt auf, der zumindest teilweise aus einem elastischen Material gebildet ist.

Da die Teile und Schneidrückstände über eine bestimmte, durch konstruktive Ausgestaltungen des Schneidtisches vorgebbare Wegstrecke herunterfallen und sich durch das in der Wanne befindliche Wasser bewegen, sind diese Teile und Schneidrückstände beim Auftreffen auf den Fördergurt so weit abgekühlt, dass der Fördergurt keinen Schaden nehmen kann. Zudem kann es aufgrund der Abkühlung der Teile und Schneidrückstände nicht zu einer stoffschlüssigen Verbindung zwischen den Teilen und Schneidrückständen einerseits und dem Fördergurt andererseits kommen, so dass ein möglichst wartungsfreier Betrieb des Schneidtisches gesichert ist. Dies wird auch dadurch begünstigt, dass die Teile und Schneidrückstände auf ihrem Weg von der Schneidauflage zum Fördergurt an keinem Punkt der Absaugeinheit beziehungsweise der Absaugsegmente anhaften können, was eine manuelle Reinigung dieser Abschnitte des Schneidtisches erfordern würde.

Die Wahl eines Gurtförderers hat gegenüber der eines Kettenräumers, wie er beispielsweise mit der Offenlegungsschrift DE 196 02 550 A1 vorgeschlagen wird, den Vorteil, dass eine sehr robuste und weitestgehend wartungsfreie Fördereinrichtung bereitgestellt wird. In der Praxis hat sich gezeigt, dass Kettenräumer wegen des fortschreitenden Kettenverschleißes und wegen möglicher Verkantungen von Kleinteilen der Ketten relativ wartungsintensiv und reparaturanfällig sind. Zur Durchführung entsprechender Reparaturen muss das in der Wanne befindliche Wasser aus dieser abgelassen werden, was sehr aufwändig und kostenintensiv ist. Eine Reparatur eines Kettenräumers ist daher mit einem relativ langen Stillstand des entsprechend ausgebildeten Schneidtisches verbunden, wodurch die Herstellungskosten von mit einem solchen Schneidtisch hergestellten Halbzeugen deutlich erhöht werden und die Produktivität gesenkt wird.

Nach einer weiteren vorteilhaften Ausgestaltung der Erfindung ist jedes Absaugsegment wahlweise über eine bezüglich der Längsrichtung des Schneidtisches seitlich angeordnete Öffnung mit dem Absaugkanal verbindbar, wobei diese seitlichen Öffnungen der Absaugsegmente derart an den Absaugsegmenten angeordnet sind, dass sie sich bei bestimmungsgemäß mit Wasser befüllter Wanne oberhalb des Wasserspiegels befinden. Das wahlweise Verbinden der Absaugsegmente mit dem Absaugkanal kann beispielsweise über an den Absaugsegmenten angeordnete Schließklappen erfolgen, die über Aktuatoren zwischen einer die jeweilige seitliche Öffnung verschließenden Schließstellung und einer die seitliche Öffnung freigebenden Offenstellung hin und her bewegbar sind. Alternativ kann das wahlweise Verbinden der Absaugsegmente mit dem Absaugkanal entsprechend DE 20 2010 008 500 U1 erfolgen.

Eine weitere vorteilhafte Ausgestaltung der Erfindung sieht vor, dass der Gurtförderer eine mit seinem in der Wanne angeordneten Abschnitt verbundene, aus der Wanne schräg aufsteigende Austragsrampe aufweist. Hierdurch werden die auf dem Fördergurt des Gurtförderers befindlichen Teile und Schneidrückstände aus dem Wasser beziehungsweise aus der Wanne ausgetragen und können anschließend beispielsweise einem Auffangwagen oder ähnlichem zugeführt werden. Dies hat gegenüber Schneidtischen, bei denen Schneidrückstände von einer Auffangplatte abgekratzt werden, den Vorteil, dass keine Grube dort im Boden neben dem Schneidtisch angeordnet werden muss, wo die Schneidrückstände vom Rückstandaustragssystem, also vorliegend vom Gurtförderer, an weitere Entsorgungseinrichtungen übergeben werden, da diese Übergabe in einem größeren Abstand zum Boden als bei Tischen mit entsprechenden Kratzförderern erfolgt.

Ferner wird es als vorteilhaft erachtet, wenn der Obertrum des in der Wanne angeordneten Abschnitts des Gurtförderers zumindest über einen Teil seiner Längserstreckung von unten abgestützt ist. Durch diese Ausgestaltung der Erfindung wird eine sehr gute Führung des Förderbandes des Gurtförderers ermöglicht, um einen sicheren und schadenfreien Betrieb des Gurtförderers und somit des damit ausgestatteten Schneidtisch zu realisieren. Die Abstützung des Obertrums kann beispielsweise über quer zu der Längserstreckung des Schneidetisches ausgerichtete Querstreben, Untergurtrollen oder ähnliche Elemente erfolgen.

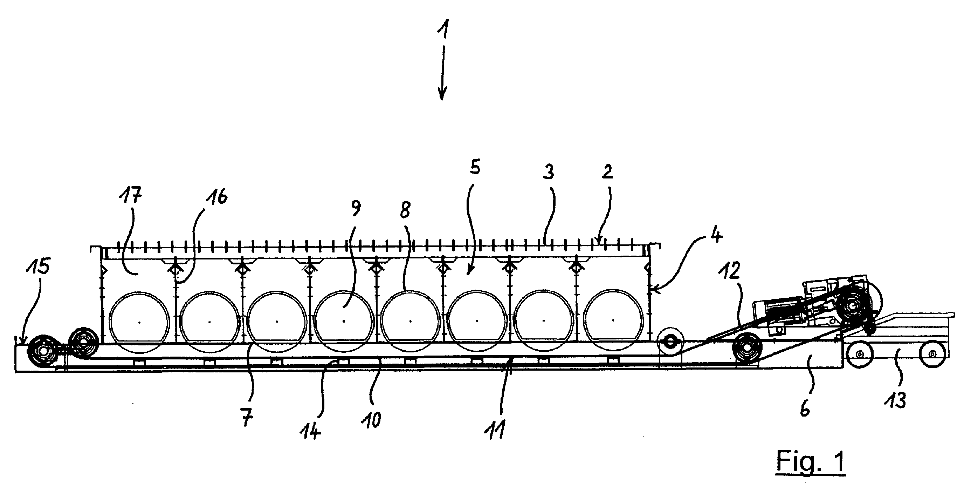

Weitere Vorteile und Merkmale der Erfindung werden im Folgenden anhand des in der beiliegenden Zeichnung gezeigten Ausführungsbeispiels des erfindungsgemäßen Schneidtisches näher erläutert. Die einzige Figur (Figur 1) der Zeichnung zeigt dabei eine schematische Seitenansicht des Ausführungsbeispiels.

Der Schneidtisch 1 umfasst eine die Oberseite des Schneidtisches 1 bildende, vertikal ausgerichtete Werkstückauflage 2 mit einem Schneidrost 3. Unterhalb der Werkstückauflage 2 befindet sich eine Absaugeinheit 4 mit mehreren quer zur in der Zeichnungsebene liegenden Längserstreckung des Schneidtisches 1 ausgerichteten, benachbart zueinander angeordneten Absaugsegmenten 5. Die Absaugsegmente 5 sind zum Absaugen von beim Schneiden auftretenden Stäuben und/oder Gasen wahlweise mit einem nicht näher dargestellten Absaugkanal verbindbar.

Der Schneidtisch 1 weist eine unter den Absaugsegmenten 5 angeordnete, mit Wasser befüllbare Wanne 6 auf, wobei jedes Absaugsegment 5 auf seiner der Wanne 6 zugewandten Seite mit einer unteren Öffnung 7 versehen ist, die derart in die Wanne 6 hineinragt, dass sie sich bei bestimmungsgemäß mit Wasser befüllter Wanne 6 etwa in Höhe des Wasserspiegels 15 befindet, wodurch die untere Begrenzung der Absaugsegmente 5 durch die Wasseroberfläche des in der Wanne 6 befindlichen Wassers gebildet wird. Die Ränder der unteren Öffnungen 7 sind in dem gezeigten Ausführungsbeispiel durch die unteren Enden der quer zur Längserstreckung des Schneidtisches 1 und den parallel zur Längserstreckung des Schneidtisches 1 verlaufenden Seitenwände 16 beziehungsweise 17 jedes Absaugsegmentes 5 gebildet.

Jedes Absaugsegment 5 ist wahlweise über eine bezüglich der Längserstreckung des Schneidtisches 1 seitlich angeordnete Öffnung 8 mit dem Absaugkanal verbindbar. Die seitlichen Öffnungen 8 der Absaugsegmente 5 sind derart an den Absaugsegmenten 5 angeordnet, dass sie sich bei bestimmungsgemäß mit Wasser befüllter Wanne 6 oberhalb des Wasserspiegels 15 befinden. Die seitlichen Öffnungen 8 sind in dem gezeigten Ausführungsbeispiel mit den Schließelementen 9 wahlweise verschließbar, welche hierzu senkrecht zur Zeichnungsebene bewegbar angeordnet sind. Alternativ können die seitlichen Öffnungen 8 entsprechend der Gebrauchsmusterschrift DE 20 2010 008 500 U1 verschlossen und geöffnet werden, wobei im Rahmen der Erfindung die Formgebung der seitlichen Öffnungen 8 an die jeweilige Ausgestaltung des Verbindungsmechanismus zwischen Absaugsegmenten 5 und Absaugkanal angepasst werden kann.

In der Wanne 6 ist ein Abschnitt 10 eines Gurtförderers 11 derart angeordnet, dass sich der Abschnitt 10 bei bestimmungsgemäß mit Wasser gefüllter Wanne 6 vollständig im Wasser befindet. Der Gurtförderer 11 weist des Weiteren eine mit seinem in der Wanne 6 angeordneten Abschnitt 10 verbundene, aus der Wanne 6 schräg aufsteigende Austragsrampe 12 auf. Wird der Fördergurt des Gurtförderers 11 im Uhrzeigersinn betrieben, werden so auf dem Obertrum des Fördergurtes befindliche Schneidrückstände kontinuierlich aus der Wanne 6 heraus und in einen Auffangwagen 13 hinein gefördert. Der Obertrum des in der Wanne 6 angeordneten Abschnitts 10 des Gurtförderers 11 ist von unten mittels quer zur Längserstreckung des Schneidtisches 1 verlaufender Streben 14 abgestützt.

**Bezugszeichenliste:**

| Zeichen | Bezeichnung |
|---|---|
| 1 | Schneidtisch |
| 2 | Werkstückauflage |
| 3 | Schneidrost |
| 4 | Absaugeinheit |
| 5 | Absaugsegment |
| 6 | Wanne |
| 7 | untere Öffnung |
| 8 | seitliche Öffnung |
| 9 | Schließelement |
| 10 | Abschnitt |
| 11 | Gurtförderer |
| 12 | Austragsrampe |
| 13 | Auffangwagen |
| 14 | Strebe |
| 15 | Wasserspiegel |
| 16 | quer verlaufende Seitenwand |
| 17 | parallel verlaufende Seitenwand |

## Patentansprüche

1. Schneidtisch (1) für eine Anlage zum Schneiden eines Werkstücks, mit einer die Oberseite des Schneidtisches (1) bildenden, vertikal ausgerichteten Werkstückauflage (2) und einer unter der Werkstückauflage (2) angeordneten Absaugeinheit (4) mit mehreren quer zur Längserstreckung des Schneidtisches (1) ausgerichteten, benachbart zueinander angeordneten Absaugsegmenten (5), wobei die Absaugsegmente (5) zum Absaugen von beim Schneiden auftretenden Stäuben und/oder Gasen wahlweise mit einem Absaugkanal verbindbar sind, und mit einer unter den Absaugsegmenten (5) angeordneten, mit Wasser befüllbaren Wanne (6),
**dadurch gekennzeichnet**
**dass** jedes Absaugsegment (5) auf seiner der Wanne (6) zugewandten Seite mit einer unteren Öffnung (7) versehen ist, die derart in die Wanne (6) hineinragt, dass sie sich bei bestimmungsgemäß mit Wasser befüllter Wanne (6) etwa in Höhe des Wasserspiegels (15) befindet, und dass der Schneidtisch (1) in Kombination mit einem Gurtförderen (11) gebaut wird, wobei in der Wanne (6) ein Abschnitt (10) des Gurtförderers (11) derart angeordnet ist, dass sich der Abschnitt (10) bei bestimmungsgemäß mit Wasser gefüllter Wanne (6) vollständig im Wasser befindet.

2. Schneidtisch (1) nach Anspruch 1, **dadurch gekennzeichnet, dass** jedes Absaugsegment (5) wahlweise über eine bezüglich der Längsrichtung des Schneidtisches (1) seitlich angeordnete Öffnung (8) mit dem Absaugkanal verbindbar ist, wobei diese seitlichen Öffnungen (8) der Absaugsegmente (5) derart an den Absaugsegmenten (5) angeordnet sind, dass sie sich bei bestimmungsgemäß mit Wasser befüllter Wanne (6) oberhalb des Wasserspiegels befinden.

3. Schneidtisch (1) nach Anspruch 1 oder 2, **dadurch gekennzeichnet, dass** der Gurtförderer (11) eine mit seinem in der Wanne (6) angeordneten Abschnitt (10) verbundene, aus der Wanne (6) schräg aufsteigende Austragsrampe (12) aufweist.

4. Schneidtisch (1) nach einem der Ansprüche 1 bis 3, **dadurch gekennzeichnet, dass** der Obertrum des in der Wanne (6) angeordneten Abschnitts (10) des Gurtförderers (11) zumindest über einen Teil seiner Längserstreckung von unten abgestützt ist.

## Claims

1. A cutting table (1) for a facility for cutting a workpiece, comprising a vertically oriented workpiece support (2), which forms the upper side of the cutting table (1), and a suction unit (4) arranged below the workpiece support (2), comprising a plurality of suction segments (5), which are arranged transverse to the longitudinal extension of the cutting table (1) and which are arranged adjacent to one another, wherein the suction segments (5) can optionally be connected to a suction channel for suction cleaning dust and/or gases appearing in response to cutting, and comprising a trough (6), which is arranged below the suction segments (5) and which can be filled with water,
**characterized in**
**that**, on its side facing the trough (6), each suction segment (5) is provided with a lower opening (7), which extends into the trough (6) such that, if the trough (6) is filled with water as intended, said lower opening is located approximately at water level (15) and that the cutting table (1) is built in combination with a belt conveyor (11), wherein a section (10) of the belt conveyor (11) is arranged in the trough (6) such that the section (10) is located completely in the water when the trough (6) is filled with water as intended.

2. The cutting table (1) according to claim 1, **characterized in that** each suction segment (5) can optionally be connected to the suction channel via an opening (8), which is arranged laterally relative to the longitudinal direction of the cutting table (1), wherein these lateral openings (8) of the suction segments (5) are arranged at the suction segments (5) such that they are located above the water lever when the trough (6) is filled with water as intended.

3. The cutting table (1) according to claim 1 or 2, **characterized in that** the belt conveyor (11) encompasses a discharge ramp (12), which is connected to the section (10) of the belt conveyor, which is arranged in the trough (6), and which rises out of the trough (6) at an incline.

4. The cutting table (1) according to any one of claims 1 to 3, **characterized in that** the carrying run of the section (10) of the belt conveyor (11), which is arranged in the trough (6), is supported from the bottom, at least across a part of a longitudinal extension thereof.

## Revendications

1. Table de découpe (1) pour une installation destinée à la découpe d'une pièce d'oeuvre, avec un support de pièce d'oeuvre (2) orienté verticalement et formant la face supérieure de la table de découpe (1) et une unité d'aspiration (4) agencée sous le support de pièce d'oeuvre (2), ladite unité d'aspiration (4) comportant plusieurs segments d'aspiration (5) agencés côte à côte et orientés transversalement par rapport à l'axe longitudinal de la table de découpe (1), ces segments d'aspiration (5) pouvant être reliés au choix à un canal d'aspiration pour aspirer les poussières et/ou les gaz générés lors de la découpe, et avec un bassin (6) pouvant être rempli avec de l'eau et qui est agencé sous les segments d'aspiration (5),
**caractérisée en ce ,**
**que** chaque segment d'aspiration (5) comporte sur la face dirigée vers le bassin (6) une ouverture inférieure (7), qui avance dans le bassin (6) de sorte qu'elle soit environ située à la hauteur du niveau d'eau (15) lorsque le bassin (6) est rempli d'eau selon sa destination conventionnelle, et que la table de découpe (1) soit fabriquée en combinaison avec un convoyeur à bande (11), et qu'un tronçon (10) du convoyeur à bande (11) soit agencé dans le bassin (6) de telle sorte que le tronçon (10) soit entièrement immergé dans l'eau lorsque le bassin (6) est rempli d'eau selon sa destination conventionnelle.

2. Table de découpe (1) selon la revendication 1, **caractérisée en ce, que** chaque segment d'aspiration (5) puisse être relié au choix avec le canal d'aspiration par l'intermédiaire d'une ouverture (8) agencée latéralement par rapport à la direction longitudinale de la table de découpe (1), ces ouvertures (8) latérales des segments d'aspiration (5) étant agencées aux segments d'aspiration (5) de sorte qu'elles soient situées au-dessus du niveau d'eau du bassin (6) lorsque le bassin (6) est rempli d'eau selon sa destination conventionnelle.

3. Table de découpe (1) selon la revendication 1 ou 2, **caractérisée en ce, que** le convoyeur à bande (11) comporte une rampe d'évacuation (12) qui est reliée à son tronçon (10) agencé dans le bassin (6) et qui sort en pente ascendante du bassin (6).

4. Table de découpe (1) selon l'une des revendications 1 à 3, **caractérisée en ce, que** le brin supérieur du tronçon (10), faisant partie du convoyeur à bande (11) et agencé dans le bassin (6), soit au moins étayé partiellement par le bas sur une partie longitudinale.
